# EUROPEAN PATENT APPLICATION

(11) **EP 1 351 142 A2**
(43) Date of publication of application: **08.10.2003**
(21) Application number: 03251730.2
(22) Date of filing: 20.03.2003
(51) Int. Cl.: G06F 9/50

(54) **Apparatus and method of lazy connection transaction enlistment**

(30) Priority: 21.03.2002 US 367138; 30.09.2002 US 262645
(71) Applicant: Sun Microsystems, Inc., Santa Clara, California 95054 (US)
(72) Inventor: Hapner, Mark W., San Jose, CA 95125 (US); Shannon, William A., Los Altos, CA 94022 (US); Jeyaraman, Thulasiraman, San Jose, CA 95117-2973 (US)
(74) Representative: Beresford, Keith Denis Lewis

(57) **Abstract**

A method, apparatus and system arranged to provide a connection(s) from an application component to a shared resource only as needed. In this way the total number of connections are limited to only those connections required to execute a particular method thereby saving valuable computing resources. In the described embodiment, after an invoked application component has started a particular transaction, a pre-enlistment notification is returned to the application server thereby putting all resource adapters on notice that a connection may be forthcoming.

## Description

### CROSS REFERENCE TO RELATED APPLICATIONS

This application takes priority under 35 U.S.C. §119(e) of U.S. Provisional Patent Application No 60/367,138 filed March 21, 2002 (Attorney Docket No.: SUN1P854P), entitled "J2EE CONNECTOR ARCHITECTURE" naming Thulasiraman Jeyaraman as inventor, which is also incorporated herein by reference for all purposes. This application is also related to the following co-pending U.S. Patent applications, which are filed concurrently with this application and each of which are herein incorporated by reference, (i) U.S. Patent Application No. 10/106,680 (Attorney Docket No.: SUN1P851), entitled "ARCHITECTURE FOR PLUGGING MESSAGING SYSTEMS INTO AN APPLICATION SERVER" naming Jeyaraman et al. as inventor; (ii) U.S. Patent Application No. 10/106,671 (Attorney Docket No.: SUN1P852), entitled "MECHANISM TO MANAGE THE LIFECYCLE OF A RESOURCE ADAPTER" naming Jeyaraman as inventor; and (iii) U.S. Patent Application No. 10/106,293 (Attorney Docket No.: SUN1P853), entitled "CALLBACK EVENT LISTENER MECHANISM FOR RESOURCE ADAPTER WORK EXECUTIONS PERFORMED BY AN APPLICATION SERVER THREAD" naming Jeyaraman as inventor each of which are incorporated by reference in their entirety.

### BACKGROUND OF THE INVENTION

### Field of Invention

The invention relates generally to computer systems. More particularly, methods and apparatus for providing as needed connections by a resource adapter for an associated application server to access a resource manager.

### Description of Relevant Art

In modem Enterprise Information Systems (EIS) is formed to include a number of EIS resources. An EIS resource provides EIS-specific functionality to its clients examples of which include a record or set of records in a database system, a business object in an ERP system, and a transaction program in a transaction processing system. Generally, an EIS is formed of a number of interconnected personal computers, workstations, mainframes, and the like along with other devices such as large mass storage subsystems, network interfaces, as well as interfaces to the public telephony systems are interconnected providing an integrated environment in which information may be shared among the various users. Typically, users may be performing a variety of operations, including order receipt, manufacturing, shipping, billing, inventory control, and other operations in which sharing of data on a real time basis provides a significant advantage over, for example, maintaining separate records and attempting to reconcile them later.

The J2EE Connector architecture defines a standard architecture for connecting the Java 2 Platform, Enterprise Edition (J2EE) platform to heterogeneous Enterprise Information System (EISs) examples of which include mainframe transaction processing (TP), database systems, and legacy database systems. An EIS provides the information infrastructure for an enterprise that typically offers a set of services to its clients as local and/or remote interfaces. EIS typically includes system level services (such as JDBC, SAP RFC, CICS ECI) as well as an application specific interface (such as the table schema and specific stored procedures, and the specific CICS TP program).

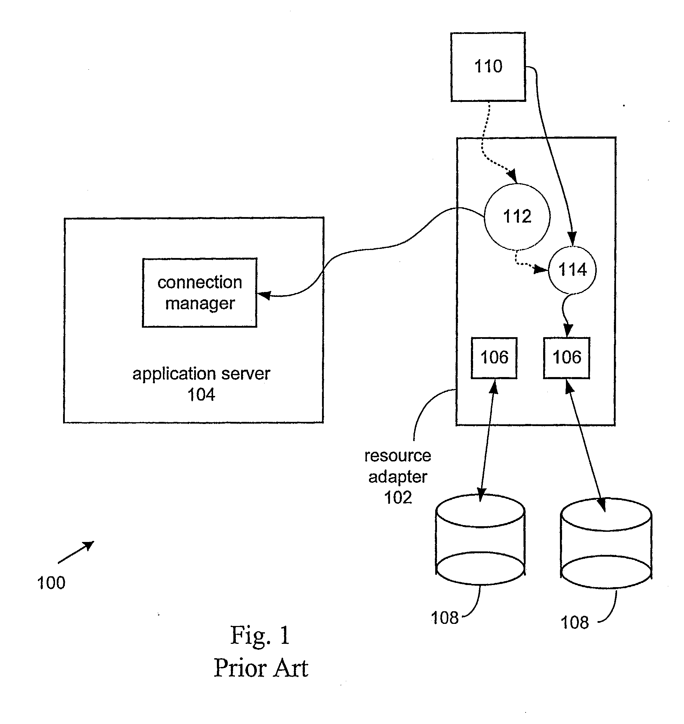

An architecture 100 for integration of enterprise system (such as J2EE) with EISs shown in Fig. 1 includes an EIS vendor-provided resource adapter 102 and an application server 104 that allows the resource adapter 102 to plug in. It should be noted that the application server uses a deployment descriptor mechanism to configure the resource adapter in the operational environment whereas a resource adapter is a system-level software driver that is used by a Java application to connect to an EIS. The resource adapter plugs into an application server and provides connectivity between the EIS, the application server, and the enterprise application. The architecture 100 also defines a set of contracts, such as transactions, security, connection management, that a resource adapter 102 must support in order to plug in to an application server 104. The contracts support bi-directional communication between the application server 104 and the resource adapter 102.

A resource manager 106 manages a set of shared EIS resources 108 for which a client requests access to in order to use its managed resources. A transactional resource manager can participate in transactions that are externally controlled and coordinated by a transaction manager. In the context of the connector architecture, a client of a resource manager can either be a middle-tier application server or a client-tier application. A resource manager is typically in a different address space or on a different machine from the client that accesses it. A connection provides connectivity to a resource manager. It enables an application client to connect to a resource manager, perform transactions, and access services provided by that resource manager. A connection can be either transactional or non-transactional. Examples include a database connection and a SAP R/3 connection. A connection to a resource manager could be used by a client for bi-directional communication depending on the capabilities of the resource manager.

An application component 110 can be a server-side component, such as an EJB, MDB, JSP, or Servlet, that is deployed, managed, and executed on an application server. It can also be a component executed on the web-client tier but made available to the web-client by an application server. Examples of the latter type of application component include a Java applet, DHTML page. The application component 110 uses a connection factory 112 to access a connection instance 114, which the component 110 then uses to connect to the underlying EIS for which the resource adapter 102 acts as a factory of connections. Examples of connections include database connections, JMS (Java Message Service) connections, and SAP R/3 connections. Connection pooling manages connections that are expensive to create and destroy.

When application components require connections through the connection factory object, the connections thus obtained may be closed by the application before a particular method has completed, or may be cached by the application for subsequent use. In those cases where the connection is cached by the application component, the cached connection handle is considered active and remains associated with a managed connection from the application server's connection pool. If the cached connection handle is used infrequently, then the associated managed connection remains in hibernation during periods of non-use. This is because the application server does not know when the hibernating managed connection would be used by the application again. Such hibernating managed connection instances result in sub-optimal usage of the system resources. Thus avoiding managed connection hibernation leads to more optimal resource utilization and better performance.

Not all connections that are cached or newly acquired by an application component may be used with a transaction (that is either started by the application server at method entry or by the application component during a method call). But since the application server does not know whether these connections would be used within the transaction, it statically (i.e., eagerly in the parlance of this discussion) enlists all such connections with the transaction. Thus, connections that are not used in a transaction are unnecessarily enlisted, which leads to sub-optimal performance.

Therefore, a method, system, and apparatus that provides a dynamic mechanism that allows the application server to lazily enlist (i.e., enlist only those connections that are used with a transaction) is desired.

### SUMMARY OF THE INVENTION

Broadly speaking, the invention relates to a method, system, and apparatus that provides a dynamic mechanism that allows the application server to enlist only those connections that are used with a transaction. As a method, the transaction connection is lazily enlisted and only after the application component requires the transaction connection to the resource, is the associated resource manager notified of the connection request.

In another embodiment, an apparatus for providing a transaction connection to a resource requested by an application component for a transaction is described. The apparatus includes means for lazily enlisting the transaction connection, means for requesting the transaction connection to the resource, means for determining if the request is a first connection request operation after the pre-enlistment, means for eagerly enlisting the requested connection only after it has been determined that the request is the first connection request operation, and means for connecting the application component to the requested resource.

In yet another embodiment, computer program product capable of execution on a computing system for providing a transaction connection to a resource requested by an application component for a transaction is described. The computer program product includes computer code for notifying a resource manager associated with the requested resource that the transaction connection is required only after a first operation after a pre-enlistment notification associated with the requested transaction connection and computer readable medium for storing the computer code.

### BRIEF DESCRIPTION OF THE DRAWINGS

The invention, together with further advantages thereof, may best be understood by reference to the following description taken in conjunction with the accompanying drawings in which:
Fig. 1 shows a conventional (eager) connection enlistment schema.
Fig. 2 shows a lazy connection enlistment schema in accordance with an embodiment of the invention.
Figs. 3 - 4 shows a flowchart detailing a process for lazy connection enlistment in accordance with an embodiment of the invention.
Fig. 5 illustrates a computer system that can be employed to implement the present invention.

### DETAILED DESCRIPTION OF THE EMBODIMENTS

The present invention will now be described in detail with reference to a few preferred embodiments thereof as illustrated in the accompanying drawings. In the following description, numerous specific details are set forth in order to provide a thorough understanding of the present invention. It will be apparent, however, to one skilled in the art, that the present invention may be practiced without some or all of these specific details. In other instances, well known process steps and/or structures have not been described in detail in order to not unnecessarily obscure the present invention.

In accordance with one embodiment of the present invention, there is described a method, apparatus and system arranged to provide a connection(s) from an application component to a shared resource only as needed. In this way the total number of connections are limited to only those connections required to execute a particular method thereby saving valuable computing resources. In the described embodiment, after an invoked application component has started a particular transaction, a pre-enlistment notification is returned to the application server thereby putting all resource adapters on notice that a connection may be forthcoming. Subsequently, when the application component requests a particular connection to an associated resource and the operation is a first operation after the pre-enlistment, a lazy enlist call is invoked on the application server which sends an enlistment call of the particular connection to the resource adapter. The resource adapter then notifies the resource manager associated with the requested resource that a connection is required (i.e., connection is now eagerly enlisted only after having been lazily enlisted).

Although, the invention will initially be described in terms of a object based system as part of a J2EE based enterprise computer system, the present invention can be used in any networked computer system.

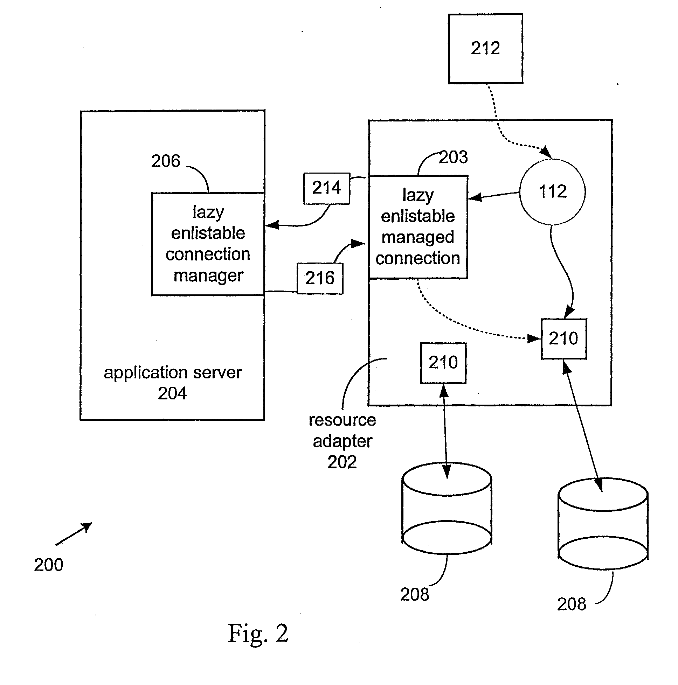

Accordingly, Fig. 2 shows system 200 arranged to lazily enlist connections to shared resources. Accordingly, the system 200 includes a resource adapter 202 having a lazy enlistable managed connection interface 203, an application server 204 having a lazy enlistable connection manager interface 206, and a number of shared resources 208 each being associated with a particular resource manager 210. It should be noted that each resource adapter instance represents at most one functional resource adapter or instance and, accordingly, the application server 204 must : instantiate at least one resource adapter instance for every resource adapter deployed. In the described J2EE implementation, the resource adapter class is implemented as a JavaBean thereby allowing various tools to be used to configure the resource adapter instance 202 prior to its deployment.

For each resource adapter deployment, it is possible that the application server 204 may create more than one resource adapter instance. In this case, the application server 204 must isolate each resource adapter instance from all other resource adapter instances regardless of whether other resource adapter instances were created from the same deployment or not. In this way, each functional resource adapter unit is isolated from (and therefore cannot share a common class loader with) other such functional units assuring that there cannot be a shared state between multiple resource adapter instances thereby providing isolation among different resource adapter instances.

At the start of a transaction by an application component 212, the lazy enlistable connection manager interface 206 sends a pre-enlistment notification 214 to the application server 204. In this way, the resource managers 210 of the various shared resources 208 are not immediately enlisted as would be required conventionally. Subsequently, control is passed back to the application server 204 until such time as the application component 212 requires a connection of a particular one of the shared resources 208. At this point, if the connection request is a first connection request immediately after initial pre-enlistment, then the application server sends connection enlistment request 216 to the resource adapter 202 which, in turn, notifies the resource manager 210 associated with the requested resource 208 that a connection is required.

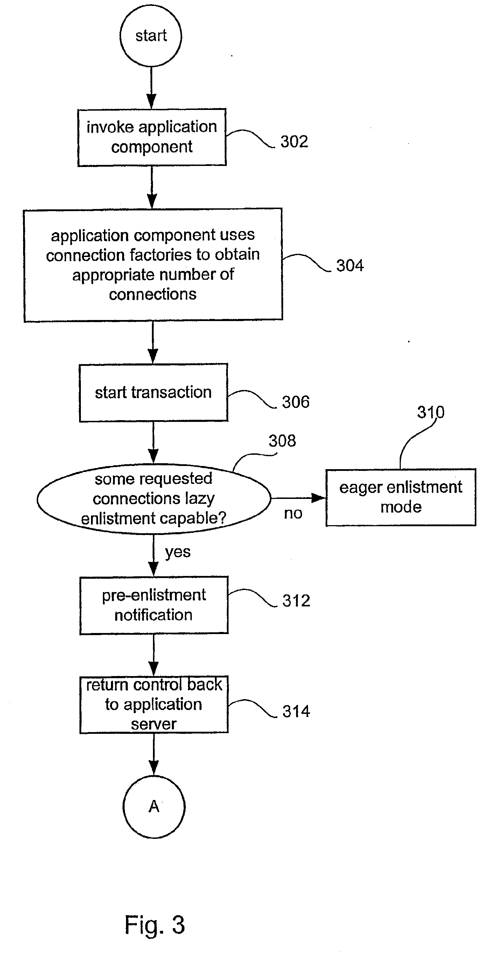

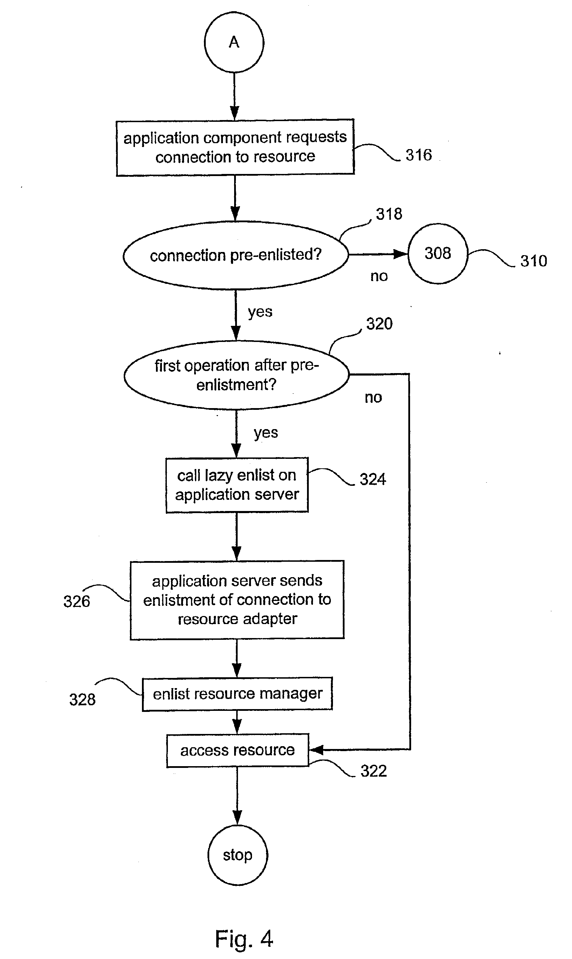

Figs. 3 & 4 shows a flowchart detailing a process 300 for lazily enlisting a shared resource connection in accordance with an embodiment of the invention.
Accordingly, the process 300 begins at 302 by invoking an application component. The invoked application component then uses a connection factory at 304 to obtain an appropriate number of connections to shared resources. At 306, a transaction is started after which at 308 a determination is made whether or not all requested connections are lazy enlistable capable. If it is determined that not all the requested connections are lazy enlistable capable, then the eager enlistment mode is invoked at 310, otherwise, a pre-enlistment notification is sent to the application server by a lazy enlistable managed connection interface at 312. Control is then passed back to the application server at 314. At 316, when the application component requests a particular connection to a shared resource, a determination is made whether or not the connection has been pre-enlisted at 318. If the connection has not been pre-enlisted than control is passed to 308, otherwise, a determination is made whether or not the current operation is a first operation after pre-enlistment of the requested connection at 320. If it is determined that the current operation is not the first operation after pre-enlistment, then the connection has been eagerly enlisted and is valid and the resource is connected and accessible by the application component at 322.

Otherwise, a lazy enlist call on the application server at 324 results in the application server sending an enlistment of the requested connection to the resource adapter at 326 which in turn enlists the resource manager associated with the requested resource at 328 thereby allowing access of the resource at 322.

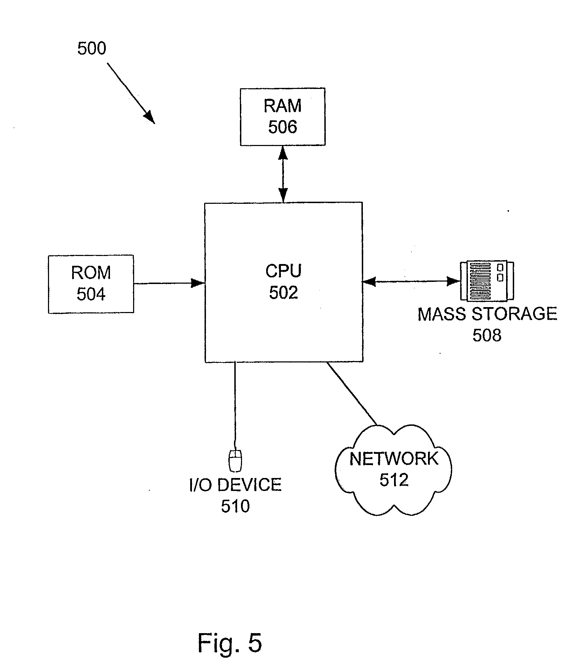

Fig. 5 illustrates a computer system 500 that can be employed to implement the present invention. The computer system 500 or, more specifically, CPUs 502, may be arranged to support a virtual machine, as will be appreciated by those skilled in the art. As is well known in the art, ROM acts to transfer data and instructions uni-directionally to the CPUs 502, while RAM is used typically to transfer data and instructions in a bi-directional manner. CPUs 502 may generally include any number of processors. Both primary storage devices 504, 506 may include any suitable computer-readable media. A secondary storage medium 508, which is typically a mass memory device, is also coupled bi-directionally to CPUs 502 and provides additional data storage capacity. The mass memory device 508 is a computer-readable medium that may be used to store programs including computer code, data, and the like. Typically, mass memory device 508 is a storage medium such as a hard disk or a tape which generally slower than primary storage devices 504, 506. Mass memory storage device 508 may take the form of a magnetic or paper tape reader or some other well-known device. It will be appreciated that the information retained within the mass memory device 508, may, in appropriate cases, be incorporated in standard fashion as part of RAM 506 as virtual memory. A specific primary storage device 504 such as a CD-ROM may also pass data uni-directionally to the CPUs 502.

CPUs 502 are also coupled to one or more input/output devices 510 that may include, but are not limited to, devices such as video monitors, track balls, mice, keyboards, microphones, touch-sensitive displays, transducer card readers, magnetic or paper tape readers, tablets, styluses, voice or handwriting recognizers, or other well-known input devices such as, of course, other computers. Finally, CPUs 502 optionally may be coupled to a computer or telecommunications network, e.g., an Internet network, or an intranet network, using a network connection as shown generally at 512. With such a network connection, it is contemplated that the CPUs 502 might receive information from the network, or might output information to the network in the course of performing the above-described method steps. Such information, which is often represented as a sequence of instructions to be executed using CPUs 502, may be received from and outputted to the network, for example, in the form of a computer data signal embodied in a carrier wave. The above-described devices and materials will be familiar to those of skill in the computer hardware and software arts.

It should be noted that the present invention employs various computer-implemented operations involving data stored in computer systems. These operations include, but are not limited to, those requiring physical manipulation of physical quantities. Usually, though not necessarily, these quantities take the form of electrical or magnetic signals capable of being stored, transferred, combined, compared, and otherwise manipulated. The operations described herein that form part of the invention are useful machine operations. The manipulations performed are often referred to in terms, such as, producing, identifying, running, determining, comparing, executing, downloading, or detecting. It is sometimes convenient, principally for reasons of common usage, to refer to these electrical or magnetic signals as bits, values, elements, variables, characters, data, or the like. It should remembered however, that all of these and similar terms are to be associated with the appropriate physical quantities and are merely convenient labels applied to these quantities.

The present invention also relates to a device, system or apparatus for performing the aforementioned operations. The system may be specially constructed for the required purposes, or it may be a general-purpose computer selectively activated or configured by a computer program stored in the computer. The processes presented above are not inherently related to any particular computer or other computing apparatus. In particular, various general-purpose computers may be used with programs written in accordance with the teachings herein, or, alternatively, it may be more convenient to construct a more specialized computer system to perform the required operations.

Although only a few embodiments of the present invention have been described, it should be understood that the present invention may be embodied in many other specific forms without departing from the spirit or the scope of the present invention.

Although the methods of providing work execution resources for a resource adapter in accordance with the present invention are particularly suitable for implementation with respect to a Java™ based environment; the methods may generally be applied in any suitable object-based environment. In particular, the methods are suitable for use in platform-independent object-based environments. It should be appreciated that the methods may also be implemented in some distributed object-oriented systems.

It should also be appreciated that the present invention may generally be implemented on any suitable object-oriented computer system. Therefore, the present examples are to be considered as illustrative and not restrictive, and the invention is not to be limited to the details given herein, but may be modified within the scope of the appended claims along with their full scope of equivalents.

## Claims

1. A method for providing a transaction connection to a resource requested by an application component for a transaction, comprising:
notifying a resource manager associated with the requested resource that the transaction connection is required only after a first operation after a pre-enlistment notification associated with the requested transaction connection.

2. A method as recited in claim 1, further comprising:
lazily enlisting the transaction connection;
requesting the transaction connection to the resource;
determining if the request is a first connection request operation after the pre-enlistment;
eagerly enlisting the requested connection only after it has been determined that the request is the first connection request operation; and
connecting the application component to the requested resource.

3. A method as recited in claim 2, wherein lazily enlisting comprises:
sending a pre-enlistment notification by a lazy enlistment managed connection interface to an application server associated with the invoked application component by a resource adapter.

4. A method as recited in claim 2, wherein eagerly enlisting comprises:
notifying a resource manager associated with the requested resource that the transaction connection is required.

5. An apparatus for providing a transaction connection to a resource requested by an application component for a transaction, comprising:
means for lazily enlisting the transaction connection;
means for requesting the transaction connection to the resource;
means for determining if the request is a first connection request operation after the pre-enlistment;
means for eagerly enlisting the requested connection only after it has been determined that the request is the first connection request operation; and
means for connecting the application component to the requested resource.

6. An apparatus as recited in claim 5, wherein said means for lazily enlisting comprises:
means for sending a pre-enlistment notification by a lazy enlistment managed connection interface to an application server associated with the invoked application component by a resource adapter.

7. An apparatus as recited in claim 5, wherein said means for eagerly enlisting comprises:
means for notifying a resource manager associated with the requested resource that the transaction connection is required.

8. Computer program product capable of execution on a computing system for providing a transaction connection to a resource requested by an application component for a transaction, comprising:
computer code for notifying a resource manager associated with the requested resource that the transaction connection is required only after a first operation after a pre-enlistment notification associated with the requested transaction connection; and
computer readable medium for storing the computer code.

9. Computer program product as recited in claim 8, further comprising:
computer code for lazily enlisting the transaction connection;
computer code for requesting the transaction connection to the resource;
computer code for determining if the request is a first connection request operation after the pre-enlistment;
computer code for eagerly enlisting the requested connection only after it has been determined that the request is the first connection operation; and
computer code for connecting the application component to the requested resource.

10. Computer program product as recited in claim 9, wherein lazily enlisting comprises:
computer code for sending a pre-enlistment notification by a lazy enlistment managed connection interface to an application server associated with the invoked application component by a resource adapter.

11. Computer program product as recited in claim 9, wherein eagerly enlisting comprises:
computer code for notifying a resource manager associated with the requested resource that the transaction connection is required.
